# EUROPEAN PATENT APPLICATION

(11) **EP 1 239 422 A1**
(43) Date of publication of application: **11.09.2002**
(21) Application number: 01302170.4
(22) Date of filing: 09.03.2001
(51) Int. Cl.: G07C 9/00

(54) **User authentication system and method using personal biometric information in a network environment**

(71) Applicant: Park, Jae Woo, Mapo-gu, Seoul (KR)
(72) Inventor: Park, Jae Woo, Mapo-gu, Seoul (KR)
(74) Representative: Needle, Jacqueline

(57) **Abstract**

A user authentication system in a network environment uses personal biometric information, and has a system (1, 2, 3) for acquiring personal biometric information such as fingerprints, iris configuration, and voice patterns. Transmission means (30) transmit the acquired biometric information through a network. A user authentication section (50) receives the transmitted information and compares it with stored biometric information from a database to authenticate the user. The database (41) contains the biometric information of authorized users and access right information. A system as described may be used to secure computer networks against hacking and/or in electronic commerce.

## Description

The present invention relates to a user authentication system and method using personal biometric information in a network environment.

Of the on-line services provided through the internet, more attention has recently been paid to fields applicable to electronic commerce. In the fields applicable to electronic commerce, study and development have been conducted on payment methods for purchasing and using information such as articles from newspapers and magazines, theses, real estate, etc. as well as on settlement methods for purchasing goods through internet.

With a conventional settlement method, the user orders goods and confirms the charged fee, and then deposits the fee on-line and confirms the deposition. Otherwise, the user inputs his/her own credit card number on-line through a security server, and then pays the fee based on an inputted number. With the recent introduction of the electronic money, the user is enabled to purchase a certain amount of electronic money, and then to pay with the appropriate amount of electronic money for the purchased goods. The user can also pay the fee by using a debit card.

However, settlement systems using credit cards pose security problems in that a third party may use the card when the personal information including the user's card number and the period of validity is disclosed consequent upon the input of the user's card number, or password and the like.

Meanwhile, various locking devices and user authentication devices have been developed and used to prevent hacking from outside wherever securities are required such as houses, companies, buildings, etc. in addition to the electronic settlement. However, those locking devices mostly using a password input method also pose a problem of easily disclosing one's password, and cannot be used where securities are required. Thus, a separate security device needs to be additionally installed.

To solve the above problems, U.S. Patent No. 5,280,527 suggests a method for approaching a system with tokens or cards containing biometric information. Such an authentication system, however, failed to completely solved the conventional problem of taking a risk in losing the cards or tokens as the system merely relies upon a single biometric information to authenticate the user. Also, the inconvenience of renewing the biometric information impeded its use as a complete security system.

It is an object of the present invention to reduce the problems identified.

According to a first aspect of the present invention, there is provided a user authentication system using personal biometric information in a network environment, comprising: a system for acquiring personal biometric information, such as fingerprints, iris configuration and voice, of a user; transmission means for transmitting said personal biometric information through a network; user authentication means for authenticating the user by comparing the information transmitted from said transmission means with stored biometric information in a database, wherein the database contains data for the user's biometric information and for the user's access right information.

The invention also extends to a user authentication method using personal biometric information in a network environment, the method comprising the steps of: inputting one or more kinds of personal biometric information of a user; transmitting the inputted biometric information;comparing the transmitted biometric information with the recorded biometric information; and authenticating an authorized user based on the compared value.

Embodiments of the invention enable a user authentication system and method to be realised for use in electronic commerce, building security systems or house security systems, and the like.

In an embodiment, errors in the biometric information are reduced and an accurate user authentication by using one or more biometric information is achieved.

In embodiments of the invention, easy renewal and storage of ever-changing biometric information is realised.

Embodiments of the present invention will hereinafter be described, by way of example, with reference to the accompanying drawings, in which:
Figure 1 shows an example of a user authentication system of the invention, and
Figure 2 illustrates a procedure of the invention for authenticating a user.

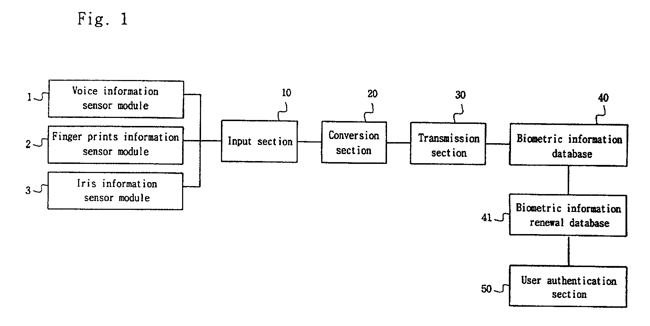

As shown in Figure 1, a system for acquiring a user's biometric information comprises an input section 10 for acquiring the user's information such as voice, fingerprints, iris, configuration, etc., and a conversion section 20 for converting the user's biometric information input by the input section 10 to transmittable data.

The input section 10 may include any kind of sensor module including a voice information sensor module 1 for inputting the user's voice, a fingerprint information sensor module 2 consisting of a fingerprint sensor for sensing the user's fingerprints in accordance with a charge distribution or a pressure difference, or a camera for sensing a pattern of fingerprints, and an iris information sensor module 3 consisting of a camera for sensing the image pattern of the iris. Other sensors may additionally or alternatively be provided.

The conversion section 20 plays a role of compressing or converting the biometric information acquired from the voice information sensor module, the fingerprint information sensor module, and iris information sensor module to the transmittable data, and may be an application independently operable and loadable on a computer.

The transmission section 30 is preferably included in the above system, and plays a role of transmitting data in the ways of parallel communication, series communication, infrared communication, etc. The transmission section 30 may be communication means such as a network card or a modem in case of a computer.

The biometric information database 40 contains the name and information of the user as well as the information required for authenticating the user and biometric information on the user. Also, the biometric information database may include a biometric information renewal database 41 for storing the transmitted biometric information to trace a changing track of the biometric information and renew the information.

The user authentication section 50 authenticates the user after comparing the biometric information transmitted from the transmission section of the network with the biometric information database.

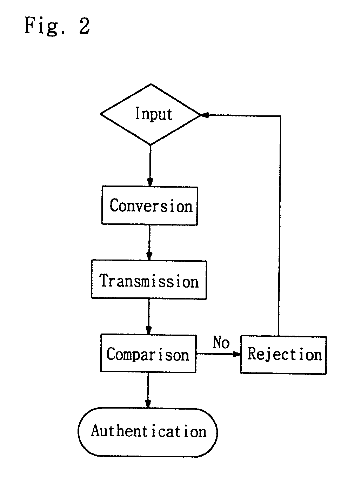

Figure 2 shows a procedure of authenticating the user by using the user authentication system according to the present invention. Referring to Figure 2, the user inputs one or more biometric information of his/her own when he/she wishes to have an authentication. For instance, the user inputs his/her own iris, fingerprint, etc. The inputted iris data and fingerprint data are transmitted to the server through the network, and compared with the existing biometric information. If the comparison result coincides with the stored biometric information, an authorization is permitted to the user.

The present invention uses inherent personal biometric information for a user authentication. Thus, the present invention notably enhances the accuracy of the authentication while providing a user convenience in the user authentication by precluding the need of using a separate key word or an identification number.

## Claims

1. A user authentication system using personal biometric information in a network environment, comprising:
a system (1, 2 ,3) for acquiring personal biometric information, such as fingerprints, iris configuration and voice, of a user;
transmission means (30) for transmitting said personal biometric information through a network;
user authentication means (50) for authenticating the user by comparing the information transmitted from said transmission means (30) with stored biometric information in a database (40), wherein the database contains data for the user's biometric information and for the user's access right information.

2. A system as claimed in Claim 1, wherein said biometric information database further includes a storage of the biometric information inputted for authentication.

3. A user authentication method using personal biometric information in a network environment, the method comprising the steps of:
inputting one or more kinds of personal biometric information of a user;
transmitting the inputted biometric information;
comparing the transmitted biometric information with the recorded biometric information; and
authenticating an authorized user based on the compared value.

4. A method as claimed in Claim 3, wherein said step of authenticating an authorized user comprises storing a compared value after comparing the transmitted biometric information with the recorded biometric information.
